# EUROPEAN PATENT APPLICATION

(11) **EP 1 637 639 A2**
(43) Date of publication of application: **22.03.2006**
(21) Application number: 05018520.6
(22) Date of filing: 25.08.2005
(51) Int. Cl.: D06C 3/00

(54) **Method of producing elastic web**

(30) Priority: 17.09.2004 US 942999
(71) Applicant: Tredegar Film Products Corporation, Richmond, VA 23225 (US)
(72) Inventor: Chung, Tze Wan Pansy, Fox River Grove IL 60021 (US); Middlesworth, Jeffrey Alan, Wauconda IL 60084 (US)
(74) Representative: Finck, Dieter

(57) **Abstract**

A method for producing nonwoven webs, laminates, and composites thereof includes activating by elongation in at least a two-stage process wherein the first elongation is in substantially the same direction and to substantially the same degree as the second elongation.

## Description

### FIELD OF THE INVENTION

Embodiments relate generally to methods for activating nonwoven webs, laminates, and composites thereof. More particularly, embodiments relate to the activation of nonwoven webs, laminates, and composites thereof for use in, for example, diapers, articles for the control of the effects of incontinence, bandages, and other hygiene articles.

### BACKGROUND OF THE INVENTION

Nonwoven fabrics, especially inexpensive polymer-based nonwoven fabrics, have found increasing use in the textile market. Nonwoven fabrics typically are webs, batts, mats, sheets, or films of fiber networks. They are commonly referred to simply as "nonwoven webs" or "webs." Many different natural, synthetic, and semi-synthetic polymer fibers are used to create nonwoven webs. Nonwoven webs may consist of one type of fiber, several different types of fibers, laminates of different fibers, and composites. The fibers may be staple (short fibers) or filaments (long fibers). Nonwoven webs often are combined with other materials to form laminates or composites. If desired, the fibers that comprise the nonwoven web may be bonded to one another using, for example, a chemical binder. Otherwise, the nonwoven webs usually are mechanically bonded through fiber entanglement.

One obstacle to the use of nonwoven fabrics has been the relatively inelastic nature of some nonwoven webs. Inelastic fabric often is rough and uncomfortable and therefore of limited utility as a textile. Nonwoven webs may be made more elastic, however; and therefore softer in feel, by a process known as activation. "Activating" a nonwoven web involves stretching or elongating the web in one or more directions beyond the elastic limit of the web. As the nonwoven web is elongated beyond its elastic limit, some of the fibers, inter-fiber bonds, and intra-fiber bonds are believed to be broken. It is believed that breaking of the fibers and bonds of the nonwoven web results in increased elasticity and softness in the web, at least to the degree of elongation.

Typically, activation of nonwoven webs is accomplished by one of two processes. U.S. Pat. No. 3,849,526, the disclosure of which is incorporated herein by reference in its entirety, describes one of the processes in relation to a method of making webs of filter material. The web is stretched by a pair of rollers with transverse ribs across the length of the rollers arranged parallel to the axis of rotation. The transverse rib of the rollers intermesh similar to the two teethed wheels of a gear but without coming into contact with one another. The web is stretched in the direction of travel, otherwise referred to as the "machine" direction, as it passes through the nip between the pair of rollers.

U.S. Pat. No. 5,167,897, the disclosure of which is incorporated herein by reference in its entirety, describes an alternative stretching process in relation to a method for incrementally stretching a laminate web to impart elasticity. The method described involves transverse stretching whereby the nonwoven web is stretched by passing it through the nip of interdigitating corrugated or grooved rollers with ribs substantially perpendicular to the axis of rotation. The degree of overlap of the opposing ribs on the corrugated rollers may be adjusted to control the degree of stretching or elongation of the web. In this way, the nonwoven web is stretched in the "transverse" direction (i.e. perpendicular to the direction of travel) as it passes through the nip between the rollers.

U.S. Pat. No. 4,223,059, the disclosure of which is incorporated herein by reference in its entirety, describes a process of stretching a nonwoven web comprised of an orientable polymeric fiber. The fibers are selectively stretched in incremental portions to form a bi-axially stretched web in first and second stations wherein the first and second stations are provided with sets of rollers having grooves parallel and perpendicular, respectively, to the axis of each set of rollers.

U.S. Patent No. 5,143,679, the disclose of which is incorporated herein by reference in its entirety, describes a method and apparatus for incrementally stretching "zero strain" stretch laminate webs to impart elasticity. The mechanical stretching operation is carried out by passing the laminate web between multiple pairs of meshing corrugated rollers; each pair of rollers exhibiting a greater degree of meshing than the preceding pair, to sequentially stretch the web in stages. The patent states that more gradual stretching of the web is believed to minimize damage to the web.

Because nonwoven webs often are combined with materials to form laminates or composites, the activation step can likewise be performed on the laminate or composite containing the nonwoven web rather than the nonwoven web by itself. For example, U.S. Pat. No. 5,861,074, the disclosure of which is incorporated herein in its entirety, describes using a diagonal intermeshing stretcher, cross direction intermeshing stretcher, machine direction intermeshing stretcher, or incremental stretching technique to stretch the laminate.

One of the disadvantages of activation of nonwoven webs and laminates or composites thereof is that the process is destructive of the structure of the nonwoven web. This may necessitate use of a high quality and expensive precursor nonwoven web in order to maintain a viable structure in the activated product. For example, typical basis weights (weight of a unit area of fabric) of 25 grams per square meter (gsm) or greater often are used commercially.

The description herein of problems and disadvantages of known apparatus, methods, and devices is not intended to limit the embodiments to the exclusion of these known entities. Indeed, embodiments may include one or more of the known apparatus, methods, and devices without suffering from the disadvantages and problems noted herein.

### SUMMARY OF THE EMBODIMENTS

In the embodiments, a method for activating a nonwoven web, laminate, composite thereof is described, wherein a nonwoven web, laminate, or composite thereof precursor material is elongated by a first means for elongation to provide a first elongated material. The first elongated material then is elongated by a second means for elongation in substantially the same direction and to substantially the same degree of elongation as in the first means for elongation.

In the embodiments, a method for activating a nonwoven web, laminate, or composite thereof is described that includes a first means for elongating the nonwoven web, laminate, or composite thereof precursor material to provide a first elongated material, and a second means for elongating the first elongated material in substantially the same direction and to substantially the same degree of elongation as in the first means for elongation. The first and second means for elongation may be, for example, sets of intermeshing gear rollers with ribs, grooves, or teeth either parallel or perpendicular to the axis of rotation of the gear rollers.

In a further embodiment, an activated nonwoven web, laminate, or composite thereof is provided, whereby the material is produced by elongating the nonwoven web, laminate, or composite thereof precursor material a first time to provide a first elongated material, and then elongating the first elongated material a second time in substantially the same direction and to substantially the same degree as the first time. The nonwoven web, laminate, or composite thereof may possess superior mechanical properties compared to webs activated by other methods.

In another embodiment, an absorbent article is provided that includes an activated nonwoven web, laminate, or composite thereof produced by elongating a nonwoven web, laminate, or composite thereof precursor material a first time to provide a first elongated material, and then elongating the first elongated material a second time in substantially the same direction and to substantially the same degree as the first time.

Still further embodiments are identified in the ensuing description, with reference to the drawings identified below.

### BRIEF DESCRIPTION OF THE DRAWINGS

Figure 1 is a drawing of an exemplary machine direction elongation means.

Figure 2 is a drawing of an exemplary transverse direction elongation means.

Figure 3 is a drawing of another exemplary machine direction elongation means.

### DETAILED DESCRIPTION OF THE EMBODIMENTS

The terminology used herein is for the purpose of describing particular embodiments only, and is not intended to limit the scope of the claims. As used throughout this disclosure, the singular forms "a," "an," and "the" include plural reference unless the context clearly dictates otherwise.

Unless defined otherwise, all technical and scientific terms used herein have the same meanings as commonly understood by one of ordinary skill in the art to which the embodiments belong. Although any methods and materials similar or equivalent to those described herein can be used in the practice or testing of the embodiments, the preferred methods, devices, and materials are now described. All publications mentioned herein are cited for the purpose of describing and disclosing the various webs, films, laminates, processing methods and articles that are reported in the publications and that might be used in connection herewith. Nothing herein is to be construed as an admission that such disclosures are prior art.

Embodiments include the possibility of using a less expensive precursor nonwoven web and still producing an activated nonwoven web, laminate, or composite thereof with acceptable end use properties by carrying out the activation in two procedures, wherein the two activations are carried out in substantially the same direction to the substantially the same degree of activation. Tensile and elastic properties in the finished product are as good as, or superior to, more expensive nonwoven webs, laminates, or composites thereof that undergo single activation steps, or double activation steps that are more severe in terms of the degree of elongation that is applied to the web, or where the second activation step applies a higher degree of elongation to the material than does the first.

The term "substantially" means that a given property or parameter (such as direction) may vary by about 10% from the stated value. Preferably, the property or parameter varies by less than 5% of the stated value, and most preferably less than 3%.

The term "permeability" denotes the ability of the vapor or liquid to permeate through the substrate.

The term "extensibility" of a web refers to the amount of strain (in percent relative to the zero strain state) that can be applied to a web by a tensile force without breakage of fibers, bonds between fibers, or undue distortion of the web structure. For a nonwoven web to be extensible in any given direction means that when a tensile force is applied to the web in that direction, the web expands in that direction, and a strain is induced in the web, substantially without breakage of fibers or of bonds between fibers. The extensibility of a creped web has two components. One is the "intrinsic extensibility" of the web, that refers to the extensibility of the web in its natural, uncreped, state. The second component is the "crepe induced extensibility", that refers to the strain that can be applied to extend the web in a given direction by virtue of the creping structure. It can be seen, for example, that after a creped web has been stretched to the point of "crepe induced extensibility," the web is predominantly in its uncreped state.

As used herein, the expression "absorbent articles" means articles that absorb and contain body fluids and other body exudates. More specifically; an absorbent article includes garments that are placed against or in proximity to the body of a wearer to absorb and contain the various exudates discharged from the body.

The expression "knee elongation" refers to the inflexion in the stress/strain tensile curve of a material that occurs when the rate of application of stress required to incrementally stretch the material beyond its current point of tension increases significantly. For the purposes of this disclosure, the knee elongation refers to the point in the stress/strain curve of the material at which the rate of increase of tensile force with elongation reaches and thereafter exceeds 0.1 Newtons/% elongation, measured on a sample with a width of one inch (25.4 millimeters). The significance of "knee elongation" is that it defines a point at which it becomes progressively more difficult in terms of applied stress to stretch the web. For a soft structure, therefore, it is preferable that the knee elongation be as high as possible, so that the web subjectively feels stretchable.

The expression "peak force" refers to the maximum force that is seen in the tensile curve of the material, referred to in Newtons per inch of sample width (N/in). A minimum peak force of 8.0 N/in is desirable to ensure that the material has sufficient strength in use.

In an exemplary embodiment, there is provided a method of activating a nonwoven web, laminate, or composite thereof. The method comprises elongating the nonwoven web, laminate, or composite thereof a first time to provide a first elongated material, and then elongating the first elongated material a second time in substantially the same direction and to substantially the same degree as in the first time.

The nonwoven web, laminate, or composite thereof may be comprised of any appropriate fiber. For example, polyethylene, polypropylene, acrylic, polyamide, polyester, rayon, cellulose, nylon, and combinations of such fibers are all appropriate for use in the nonwoven web. The nonwoven web in the embodiments also may be the product of any process for forming the same. For example, the nonwoven web may be carded, spun-bonded, wet-laid, air-laid and melt-blown as such processes are well known in the art. One knowledgeable in the art will appreciate the myriad ways in which a nonwoven web made be created from its constituent fibers and the many different types of fibers that might be utilized, using the guidelines provided herein. In one embodiment, the web is a spun-bonded material made of polypropylene fiber.

If desired, the nonwoven web may be laminated with another film or otherwise formed into a composite structure. For example, apertured films, where the film has a plurality of holes that extend from one surface to a second surface, may be formed with at least one layer of a nonwoven web. The apertured films may be two-dimensional films, where there is no three-dimensional structure in the holes that connect the first surface of the film to the second surface of the film, or three-dimensional films, where protuberances are found on the surface of the film. The protuberances are preferably in the shape of polygons, for example, squares, hexagons, pentagons, ellipses, circles, ovals, slots, etc., in a regular or random pattern.

The film also may be a monolayer film, coextruded film, coated film, or composite film. Coated films are films comprising a monolayer or coextruded film that are subsequently coated, (*e.g.,* extrusion coated, impression coated, or printed) with a thin layer of the same or different material to which it is inseparably bonded. Composite films are films comprising more than one film where at least two films are combined in a bonding process. Bonding processes may incorporate adhesive layers between the film layers.

The film used in the laminate may be of any appropriate material. For example, the film may be made of an elastomeric polymer. The elastomeric film may be of the polyolefin type that is processable into a film for direct lamination by melt extrusion onto the nonwoven web. Suitable elastomeric polymers also may be biodegradable or environmentally degradable. Suitable elastomeric polymers for the film include, but are not limited to poly(ethylene-butene), poly(ethylene-hexene), poly(ethylene-octene), poly (ethylene-propylene), poly(styrenebutadiene-styrene), poly(styrene-isoprene-styrene), poly(styrene-ethylenebutylene-styrene), poly(ester-ether), poly(ether-amide), poly(ethylenevinylacetate), poly(ethylene-methylacrylate), poly(ethylene-acrylic acid), poly(ethylene butylacrylate), polyurethane, poly(ethylene-propylene-diene), ethylene-propylene rubber, polyisoprene, and butadiene-styrene copolymers. A new class of rubber-like polymers also may be employed that are generally referred to as polyolefins produced from single-site catalysts. The most preferred catalysts are metallocene catalysts whereby ethylene, propylene, styrene and other olefins may be polymerized with butene, hexene, octene, etc., to provide elastomers suitable for use in accordance with the principles herein, such as poly(ethylene-butene), poly(ethylene-hexene), poly(ethylene-octene), poly(ethylene-propylene) and/or polyolefin terpolymers thereof. In certain preferred embodiments, the elastomeric materials may comprise high performance elastomeric materials such as elastomeric block copolymers. An example of a suitable elastomeric block copolymer is KRATON® (commercially available from Kraton Polymers of Houston, Texas).

Polyethylene is a preferred material for production of the film. For example, low density polyethylene (LDPE), linear low density polyethylene (LLDPE), or a blend of LDPE and LLDPE, polypropylene, and combinations thereof are useful. In one embodiment, the film is made from a mixture of at least about 10% by weight, or about 10% to about 50% by weight of medium density polyethylene (MDPE), and the remainder is LDPE, LLDPE or a blend of LDPE and LLDPE. The film also may be made from a mixture of at least 10% by weight, or about 10% to about 50% by weight of high density polyethylene (HDPE) and the remainder is LDPE, LLDPE or a blend of LDPE and LLDPE. A particularly preferred film material is a coextruded film with skin layers composed of metallocene LLDPE, blended with LDPE, where the core material is a styrenic polymer, preferably a styrene butadiene rubber blend. Each of the material formulations may include additional materials, usually in small percentages relative to the polymer, such as processing aids, colorants (*e.g.*, whiteners), and surfactants. The use of the term LLDPE herein also includes those LLDPE's that are made using metallocene catalysts and are commonly referred to as mLLDPE.

The film may be produced by any appropriate method including, but not limited to, cast or blown extrusion processes. Extrusion processes are well known in the art, and any suitable extrusion process can be used to prepare a molten sheet of polymer, using the guidelines provided herein. These extrusion processes usually comprise mechanisms for feeding materials to the extruder, mechanisms for melting and mixing materials, mechanisms for transporting the molten materials to a forming die, and mechanisms for cooling the molten sheet of polymer to form a polymer film. In case a second film or nonwoven web is laminated to the molten sheet, the second film or web may participate in the cooling process.

Methods and apparatus suitable for feeding the raw materials to the extruder generally are known in the art. A preferred feeding mechanism comprises a conveying mechanism such as a vacuum pump connected to a vacuum pipe, the pipe being submerged in a reservoir of polymer material. In a controlled manner, the pump generates vacuum in the pipe causing the pipe to suction polymer from the reservoir and deposit the polymer in a feed hopper. The feed hopper typically contains a metering device that deposits accurately controlled amounts of polymer into the extruder receiving cavity. Multiple cavities and feed hoppers may be present in a single extruder thereby enabling feeding of multiple components. Additional, antistatic and vibratory devices can be positioned at or near the feed hoppers to assist in accurately dosing the polymer. Other feeding mechanisms known to those skilled in the art or later discovered are also contemplated for use herein.

A preferred melt forming die is a cast die, but other types of dies are possible such as blown film dies. The die forms a molten polymer sheet that is subsequently cooled to create a film or a laminate structure.

In an alternative embodiment, the molten polymer exits the extruder through a pelletizing die (a flat, cylindrical plate with multiple small openings). As the polymer passes through the die, it forms strings of polymer. The strings may be subsequently cooled and cut by a rotating knife. The cut strings are called "compounded pellets." Compounded pellets can then be transported to a second extruder where they are melted again, transported to a die, and formed into a sheet that is subsequently cooled to form a film or laminate structure. In certain embodiments, the compounded pellets are combined with other polymer pellets in the second extruder.

Cooling mechanisms also are well known in the art, and any cooling mechanism now known or later discovered can be used. A primary cooling mechanism can include an embossing station comprising two cooled rollers that are pressed against each other. The molten polymer is caused to pass between the embossing rollers (called engraving and anvil rollers, respectively) where it is cooled by contact with the cooler rollers. Alternatively, the rollers can both be smooth chill rollers without an engraving or embossing roll. Another well known cooling device comprises passing the polymer sheet over a single roll and applying an air or cool water curtain to the molten polymer to cause it to contact the single cooling roll. Both the air or water curtain and the contact with the roll contribute to cooling.

Another well known cooling mechanism comprises passing the polymer sheet over an apertured screen while in the presence of vacuum. Vacuum causes the polymer sheet to come into close contact with the screen, causing the polymer to cool. In one embodiment the vacuum and screen combination causes the polymer sheet to conform to the shape of the apertured screen surface, forming protrusions in the film. The side of the film that contacts the screen is called the formed film inner surface, and the side of the film that is opposite the inner surface is called the formed film outer surface. The protrusions can be apertured, or they can be unapertured. Forming apertured polymer films in this manner is well known in the art, as exemplified by U.S. Patent Nos. 3,045,148; 4,155,693; 4,252,516; 4,508,256; and 4,509,907; the disclosures of which are incorporated by reference herein in their entirety.

Other means of perforation include passing the film over a perforating roll with projecting pins or blades that enter the film and produce holes as the film passes over the roll. In these methods, a backing roll is generally used that holds the film in place against the perforating roll. The actual perforation then takes place in the nip between the perforating roll and the backing roll.

Activating a nonwoven web, laminate, or composite thereof using certain embodiments enables the use of relatively lower quality fibers without sacrificing the strength, elasticity, and other important characteristics of the activated nonwoven web. Therefore, in one embodiment the nonwoven web precursor material has a basis weight of 25 or less grams per square meter. In another embodiment, the nonwoven web precursor material has a basis weight of 20 or less grams per square meter.

Another embodiment provides a method for activating a nonwoven web, laminate, or composite thereof. The method includes a first means for elongating the nonwoven web, laminate, or composite thereof to provide a first elongated material. The method further includes a second means for elongating the first elongated material in substantially the same direction and to substantially the same degree as in the first means.

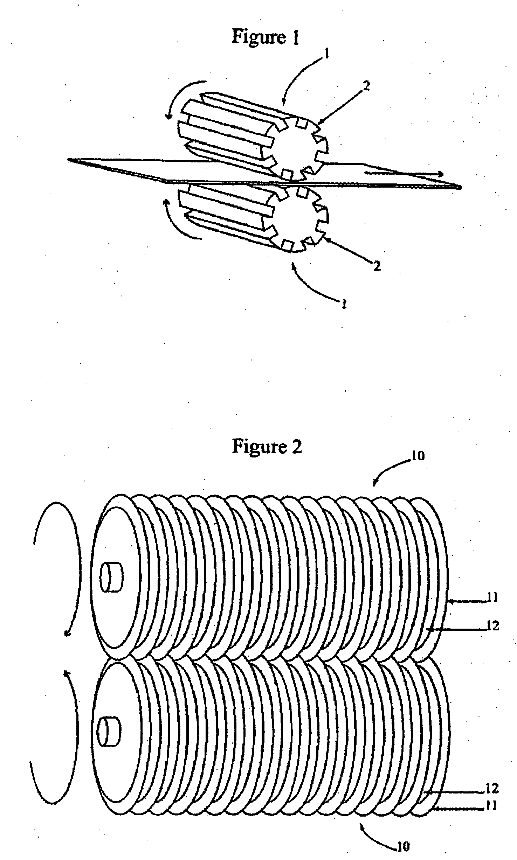

The first and second means for elongating the nonwoven web, laminate, or composite thereof, for example, may be an intermeshing gear (IMG) machine where elongation is accomplished by stretching the film through a gear-like pair of rollers, as is exemplarily illustrated in Figure 1. To accomplish elongation of the nonwoven web in the machine direction, the rollers 1 have ribs, grooves, or teeth 2 that extend parallel to the axis of rotation of the rollers. Those skilled in the art will appreciate that the embodiment illustrated in Figure 1 is only an approximate depiction, and that the roller arrangement may have a variety of alternative configurations.

To accomplish elongation of the nonwoven web in the transverse direction, the rollers have ribs, grooves, or teeth that extend perpendicular to the axis of rotation of the rollers, as is exemplarily illustrated in Figure 2. The intermeshing gears 10 may be described as an alternating stack of two different diameter disks 11 and 12. Disks that are larger in diameter 11 alternate on the rollers with disks that are smaller in diameter 12. The two rollers are aligned so that the larger diameter disks 11 of one roller are opposite the smaller diameter disks 12 of the other roller. In this way, the ribs, grooves, or teeth that extend perpendicular to the axis of rotation of the rollers intermesh.

The shafts where the rollers may be mounted can be positioned between two machine side plates, the first shaft being located in fixed bearings and the second shaft being located in bearings in slidable members. The position of the slidable members is adjustable by means of wedge shaped elements operable by adjusting screws or other devices. Screwing the wedges out or in will move the vertically slidable member respectively down or up to further engage or disengage the gear-like teeth of the second intermeshing roll with the first intermeshing roll. Micrometers mounted to the side frames indicate the depth of engagement of the teeth of the intermeshing roll.

Air cylinders may be employed to hold the slidable members in their engaged position firmly against the adjusting wedges to oppose the opposing force exerted by the material being stretched. These cylinders also may be retracted to disengage the upper and lower intermeshing rollers from each other for purposes of threading material through the intermeshing equipment or in conjunction with a safety circuit that would open all the machine nip points when activated.

A drive means typically is utilized to drive the stationery intermeshing roll. If the intermeshing rollers are to remain in constant engagement, the second intermeshing roller typically need not be driven because torque will be transferred from the driven roller through the nonwoven web, laminate, or composite thereof to the second roller. The teeth preferably are not designed to transmit rotational torque and do not contact metal-to-metal in normal intermeshing stretching operation.

In the case of rollers with ribs, grooves, or teeth parallel to the axis of rotation of the rollers, it may be preferable to incorporate an anti-backlash gearing arrangement to facilitate disengagement of the second intermeshing roller from the driven roller. An anti-backlash gearing arrangement assures that upon reengagement, the teeth of one intermeshing roller always fall between the teeth of the other intermeshing roller. This feature avoids potentially damaging physical contact between addendums of intermeshing teeth. If the intermeshing rolls are to remain in constant engagement, the second intermeshing roll typically need not be driven. Driving the second roll may be accomplished by the driven intermeshing roll through the material being stretched. The teeth are not designed to transmit rotational torque and do not contact motal-to-metal in normal intermeshing stretching operation.

In the case of rollers with ribs, grooves, or teeth perpendicular to the axis of rotation of the rollers, it may be preferable to incorporate a means for causing the shafts of the two intermeshing rollers to remain parallel when the movable second shaft is raising or lowering. This is necessary to assure that the teeth of one intermeshing roller falls between the teeth of the other intermeshing roller to avoid potentially damaging physical contact between the intermeshing teeth. This parallel motion may be assured, for example, by a rack and pinion arrangement wherein a stationary gear rack is attached to each side frame in juxtaposition to the vertically slidable members. A gear resides on each end of this shaft and operates in engagement with the racks to produce the desired parallel motion.

An example of a particularly useful embodiment employs IMG rollers that can be temperature controlled from about 50°F to about 210°F, and more preferably in a range of from about 70°F to about 190°F. The roll temperature may be maintained through the use of an internal flow of a heated or cooled liquid, an electrical system, an external source of cooling/heating, combinations thereof, and other temperature control and maintenance methods that will be apparent to those of ordinary skill in the art. The preferred temperature control method is internal flow through the rollers of a heated or cooled liquid.

The depth of engagement of the roller teeth determines the degree of elongation to which the web is subjected. A balance usually is drawn between the depth of engagement of the roller teeth and the precursor web composition, as these affect many important physical properties of the web. Some of the factors affecting the choice of pitch, teeth depth, and depth of engagement include the composition of the web, desired final properties (breathability, absorbency, strength, cloth-feel), and the width and diameter of the IMG rollers. The final application of the nonwoven web, laminate, or composite thereof also affects these choices because it determines desired final properties.

The width of the IMG rollers presents economic and technical limitations― as the width increases the weight of the rollers also increases and so does the amount of deflection experienced by the rollers. Deflection creates variation not only in the process of stretching, but also in the process of making the rollers, particularly as the pitch and tooth depth increases. Those skilled in the art are capable of designing a suitable means for elongation in the transverse direction depending on the myriad factors noted above, using the guidelines provided herein.

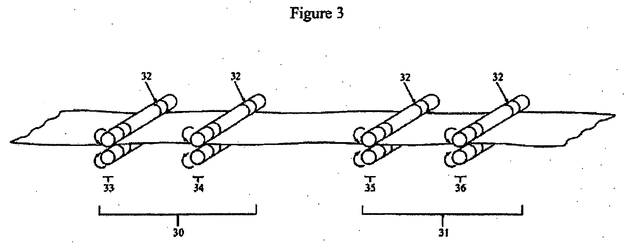

Another embodiment involves incrementally stretching the webs without using IMG rollers. In this embodiment, there is a first means for elongating the nonwoven web, laminate, or composite thereof and a second means for elongating the nonwoven web, laminate, or composite, thereof, as illustrated in Figure 3. Those skilled in the art will appreciate that the embodiment illustrated in Figure 3 is Only an approximate depiction, and that the first means and second means may have a variety of alternative configurations, following the guidelines provided herein.

Figure 3 generally depicts a series of rollers (first pair and second pair of rollers 33, 34, and first pair and second pair of rollers, 35, 36) rotating at different circumferential speeds. The first means 30 for elongating the nonwoven web, laminate, or composite thereof comprises a first pair 33 of rollers and a second pair 34 of rollers. The second means 31 for elongating the nonwoven web, laminate, or composite thereof also comprises a first pair 35 of rollers and a second pair 36 of rollers. The rollers on each pair of rollers 33, 34, 35, and 36 may have frictional engaging means 32 for frictionally engaging the nonwoven web, laminate, or composite thereof. The frictional engaging means may be similar to sand paper or other means as will be appreciated by one of ordinary skill in the art, using the guidelines herein.

The second pair of driven rollers 34 of the first means 30 for elongating the nonwoven web, laminate, or composite thereof is operated at a faster linear circumferential speed than is the first pair of driven rollers 33 of the first means 30. If the coefficient of friction between the nonwoven web, laminate, or composite thereof and the frictional engaging means 32 is sufficiently high, the web is forced to stretch in the gap between the first pair 33 and second pair 34 of driven rollers, resulting in machine direction elongation. The second pair of driven rollers 36 of the second means 31 for elongating the nonwoven web, laminate, or composite thereof likewise is operated at a faster linear circumferential speed than is the first pair of driven rollers 35 of the second means 31. If the coefficient of friction between the nonwoven web, laminate, or composite thereof and the frictional engaging means 32 is sufficiently high, the nonwoven web, laminate, or composite thereof again is forced to stretch in the gap between the first pair 35 and second pair 36 of driven rollers, resulting in machine direction elongation. The degree of elongation of the nonwoven web, laminate, or composite thereof in the first means 30 of elongation is substantially the same as in the second means 31 of elongation.

Another embodiment provides an activated nonwoven web, laminate, or composite thereof made by a process comprising elongating a precursor nonwoven web, laminate, or composite thereof a first time to provide a first elongated material. The method further includes elongating the first elongated material a second time in substantially the same direction and to substantially the same degree as the first time to produce the activated nonwoven web, laminate, or composite thereof.

In certain embodiments, the activated nonwoven web, laminate, or composite thereof is prepared from a nonwoven precursor having a basis weight of 25 or less grams per square meter. Use of such a low basis weight precursor material may make production of the activated nonwoven web, laminate, or composite thereof less expensive than that produced by previously known methods. Nevertheless, the activated nonwoven web, laminate, or composite thereof has excellent strength and elasticity characteristics.

For example, a sample of a nonwoven web/elastic laminate precursor material (nonwoven basis weight of 25 gsm) that has been activated twice, each time to a depth of 0.2 inches, had a peak force of 10.52 Newtons per inch of sample width. Comparatively, the identical precursor material incrementally activated once at 0.175 inches and a second time at 0.2 inches had a peak force of 8.54 Newtons per inch of sample width. In addition, the same precursor material activated twice, each time to a depth of 0.2 inches, had a knee elongation value at 0.1 Newtons/percent elongation of 102.87%. Comparatively, the same precursor sample activated once at 0.2 inches had a knee elongation value at 0.1 Newtons/percent elongation of 63.8%.

In another embodiment, the activated nonwoven web, laminate, or composite thereof is prepared from a nonwoven precursor material having a basis weight of 20 or less grams per square meter. Again, use of a lower quality precursor web may make production of the activated product less expensive without unduly sacrificing strength or elasticity characteristics. For example, a sample of a nonwoven web/elastic laminate precursor material (nonwoven basis weight of 20 gsm) that has been activated twice, each time to a depth of 0.2 inches, had a peak force of 8.77 Newtons per inch of sample width. Comparatively, the same precursor incrementally activated once at 0.175 inches and a second time at 0.2 inches had a peak force of 7.43 Newtons per inch of sample width. In addition, the same precursor material activated twice, each time to a depth of 0.2 inches, had a knee elongation value at 0.1 Newtons/percent elongation of 109.29%. Comparatively, the same precursor sample activated once at 0.2 inches had a knee elongation value at 0.1 Newtons/percent elongation of 65.42%.

Another embodiment provides an absorbent article including an activated nonwoven web, laminate, or composite thereof made by the process of the embodiments. In certain useful embodiments, the absorbent article is made of an activated laminate of a nonwoven web and an elastic film. The nonwoven web and elastic film may be made from any of the polymers mentioned herein or other polymers as will be appreciated by someone of ordinary skill in the art using the guidelines herein. It is preferred that the activated material be included as part of the topsheet, backsheet, fastening elements, side panels, and other extensible elements of the absorbent article. The elongation means utilized to elongate the nonwoven web, laminate, or composite thereof may be any of the means described herein or other applicable means as will be appreciated by persons of ordinary skill in the art, using the guidelines herein.

### Example

Samples of nonwoven (Sofspan® 200 supplied by BBA Nonwovens, One Lakeview Place - Suite 204, Nashville, TN 37124 USA) and elastomeric formed film (Flexaire® , 40 gsm supplied by Tredegar Film Products, 1100 Boulders Parkway, Richmond, VA 23225 USA) were vacuum bonded and activated between a pair a finned rollers produced by BIAX Fiberfilm (Biax-Fiberfilm Corporation, N992 Quality Drive, Suite B, Greenville, WI 54942 USA). The activation pattern as indicated in the tables refers to the depth of engagement of the teeth of the gear rollers. This is the maximum depth at which the ribs, grooves, or teeth of one activation roller penetrate between the ribs, grooves, or teeth of the opposing activation roller. For example, a 200 activation depth refers to a laminate being activated once, and to a depth of 200 mils (thousandths of an inch). A 200/200 pattern refers to a laminate being activated twice, to depths of 200 mils each time.

Samples with a gauge length of 2 inches (50.8 millimeters) were stretched on a Synergie® 200 tensile tester (commercially available from MTS Systems Corp, 14000 Technology Drive, Eden Prairie, MN 55344 USA) at a rate of 500 mm/minute. Numbers quoted are the average of 4 trials.

Table 1 illustrates the effect of nonwoven basis weight and activation pattern on the peak force and knee elongation of the laminate. A double activation yields a superior knee elongation value, but at the cost of some loss of peak force.

**TABLE 1**

| **Basis Weight (grams per square meter)** | **Activation Depth (thousandth of inch)** | **Peak Force (Nowtons/inch of sample width)** | **Knee Elongation at 0.1 N/%** |
|---|---|---|---|
| 25 | 200 | 20.67 | 63.8 |
| 25 | 200/200 | 10.52 | 102.87 |
| 20 | 200 | 16.66 | 65.42 |
| 20 | 200/200 | 8.77 | 109.29 |

Table 2 demonstrates an advantage of embodiments over the use of a process where the second activation is to a greater degree than the first.

**TABLE 2**

| **Basis Weight (grams per square meter)** | **Activation Depth (thousandth of inch)** | **Peak Force (Newtons/inch)** | **Knee Elongation at 0.1 N/%** |
|---|---|---|---|
| 20 | 175/200 | 7.43 | 113.44 |
| 25 | 175/200 | 8.54 | 113.9 |
| 20 | 200/200 | 8.77 | 109.29 |
| 25 | 200/200 | 10.52 | 102.87 |
| 20 | 175/175 | 11.42 | 93.55 |
| 25 | 175/175 | 15.72 | 86.8 |

All of the samples that use a 200 mil depth of engagement for the second activation have similar knee elongation values. Of these samples, the double activation samples that use a lesser depth of engagement followed by the greater one at 200 mils actually yield inferior peak force values compared to samples where two equal depths of engagement were used. Double activation of the sample at 200 mils for both activations using a 20 gsm nonwoven yields an acceptable product.

A particularly useful embodiment is exemplified by the example above designated basis weight of 20 and activation depth of 175/175.

The examples of the embodiments are limited to webs subjected to two activation procedures. However, embodiments are not limited to two activation procedures, and it will be understood by one skilled in the art that a process characterized by further activation, for example three or more, falls within the scope of the appended claims.

While the description presented above has been described with reference to particularly preferred embodiments, it is recognized that similar advantages may be obtained by other embodiments. It will be evident to those skilled in the art that various changes and modifications can be made without departing from the spirit and scope of the embodiments. All such modifications are intended to be encompassed within the scope of the appended claims.

## Claims

1. A method of activating a nonwoven web, laminate, or composite thereof comprising:
elongating a nonwoven web, laminate, or composite thereof precursor material a first time to provide a first elongated material;
and
elongating the first elongated material a second time in substantially the same direction and to substantially the same degree as the first elongation.

2. The method of Claim 1, wherein the nonwoven web, laminate, or composite thereof contains fibers selected from the group consisting of polyethylene, polypropylene, acrylic, polyamide, polyester, rayon, cellulose, nylon fibers, and combinations and composites thereof.

3. The method of Claim 1, wherein the nonwoven material in the nonwoven web, laminate, or composite thereof precursor material has a basis weight of 20 or less grams per square meter.

4. The method of Claim 1, wherein the nonwoven material in the nonwoven web, laminate, or composite thereof precursor material has a basis weight of 25 or less grams per square meter.

5. The method of Claim 1, wherein the laminate comprises at least one elastic film or sheet and at least one nonwoven web.

6. A method for activating a nonwoven web, laminate, or composite thereof precursor material comprising:
elongating the nonwoven web, laminate, or composite thereof precursor material a first time by a first means for elongating to provide a first elongated material; and
elongating the first elongated material a second time by a second means for elongating, the second means for elongating being in substantially the same direction and to substantially the same degree as in the first means for elongating.

7. The method of Claim 6, wherein said first and second means for elongating comprises sets of intermeshing gear rollers with ribs, grooves, or teeth parallel to the axis of rotation of the intermeshing gear rollers.

8. The method of Claim 6, wherein said first and second means for elongating comprises sets of intermeshing gear rollers with ribs, grooves, or teeth perpendicular to the axis of rotation of the intermeshing gear rollers.

9. The method of Claim 6, wherein said first and second means for elongating each comprises a first pair and a second pair of driven rollers with means for frictionally engaging the nonwoven web, laminate, or composite thereof, wherein the second pair of driven rollers is operated at a faster linear circumferential speed than is the first pair of driven rollers.

10. An activated nonwoven web, laminate, or composite thereof made by the method of claim 1.

11. The activated nonwoven web, laminate, or composite of Claim 10, wherein the nonwoven web in the nonwoven web, laminate, or composite thereof precursor material has a basis weight of 20 or less grams per square meter.

12. The activated nonwoven web, laminate, or composite of Claim 11, wherein elongating the first and second time comprises elongating to an activation depth of about 0.2 inches each time.

13. The activated nonwoven web, laminate, or composite of Claim 12, having a peak force of at least 8.00 Newtons per inch of sample width.

14. The activated nonwoven web, laminate, or composite of Claim 12, having a knee elongation of at least 109% measured at the point in the stress/strain curve at which the rate of increase of tensile force with elongation reaches 0.1 Newtons per percent elongation.

15. The activated nonwoven web, laminate, or composite of Claim 11, wherein elongating the first and second time comprises elongating to an activation depth of about 0.175 inches each time.

16. The activated nonwoven web, laminate, or composite of Claim 15, having a peak force of at least 11.00 Newtons per inch of sample width.

17. The activated nonwoven web, laminate, or composite of Claim 15, having a knee elongation of at least 93% measured at the point in the stress/strain curve at which the rate of increase of tensile force with elongation reaches 0.1 Newtons per percent elongation.

18. The activated nonwoven web, laminate, or composite of Claim 10, wherein the nonwoven web in the nonwoven web, laminate, or composite thereof precursor material has a basis weight of 25 or less grams per square meter.

19. The activated nonwoven web, laminate, or composite of Claim 18, wherein elongating the first and second time comprises elongating to an activation depth of about 0.2 inches each time.

20. The activated nonwoven web, laminate, or composite of Claim 19, having a peak force of at least 10 Newtons per inch of sample width.

21. The activated nonwoven web, laminate, or composite of Claim 19, having a knee elongation of at least 102% measured at the point in the stress/strain curve at which the rate of increase of tensile force with elongation reaches 0.1 Newtons per percent elongation.

22. The activated nonwoven web, laminate, or composite of Claim 18, wherein elongating the first and second time comprises elongating to an activation depth of about 0.175 inches each time.

23. The activated nonwoven web, laminate, or composite of Claim 22, having a peak force of at least 15 Newtons per inch of sample width.

24. The activated nonwoven web, laminate, or composite of Claim 22, having a knee elongation of at least 86% measured at the point in the stress/strain curve at which the rate of increase of tensile force with elongation reaches 0.1 Newtons per percent elongation.

25. An absorbent article comprising the activated nonwoven web, laminate, or composite thereof of Claim 10.

26. The absorbent article in Claim 25, wherein the nonwoven web in the nonwoven web, laminate, or composite thereof precursor material has a basis weight of less than or equal to 20 grams per square meter.

27. The absorbent article in Claim 25, wherein the nonwoven web in the nonwoven web, laminate, or composite thereof precursor material has a basis weight of less than or equal to 25 grams per square meter.

28. The absorbent article in Claim 25, wherein the laminate comprises at least an elastic film and a nonwoven web.
